# EUROPÄISCHE PATENTANMELDUNG

(11) **EP 4 711 993 A1**
(43) Veröffentlichungstag der Anmeldung: **18.03.2026**
(21) Anmeldenummer: 24200756.5
(22) Anmeldetag: 17.09.2024
(51) Int. Cl.: G06Q 10/04, G06Q 50/06, F24D 19/10, F24F 11/46

(54) **VERFAHREN ZUR GEPLANTEN STEUERUNG DES BETRIEBS EINES WÄRME- UND/ODER KÄLTEERZEUGERS**

(71) Anmelder: Xtherma GmbH, 10115 Berlin (DE)
(72) Erfinder: DECKER, Felix, 12435 Berlin (DE); OTTEN, Lennart, 49716 Meppen (DE); KRAHN, Benjamin, 10365 Berlin (DE)
(74) Vertreter: Raffay & Fleck

(57) **Zusammenfassung**

Die Erfindung betrifft ein Verfahren zur geplanten Steuerung des Betriebs eines Wärme- und/oder Kälteerzeugers, ein entsprechendes Gateway und System.

Das Verfahren ist so ausgestaltet, dass das Gateway mit dem mindestens einen Wärme- und/oder Kälteerzeuger und mit dem mindestens einen Server über das Internet verbunden ist.

Der mindestens eine Server bestimmt eine Erwartungswärmebedarfsmenge und/oder Erwartungskältebedarfsmenge für eine erste Planungszeitspanne, insbesondere einen Tag und eine Wärme- und/oder Kältebedarfstoleranzmenge.

Erfindungsgemäß bestimmt der Server basierend auf vorbekannten Leistungskenndaten des mindestens einen Wärme- und/oder Kälteerzeugers eine Optimierung der Verteilung der Erzeugung der Erwartungswärmebedarfsmenge und/oder Erwartungskältebedarfsmenge über die erste Planungszeitspanne.

Zudem nimmt der mindestens eine Server eine Verteilung der Erzeugung in einer Mehrzahl zweiter Planungsspannen vor.

Die geplante Erzeugung zumindest der nächsten zweiten Planungszeitspanne kommuniziert der mindestens eine Server an das Gateway. Das Gateway steuert dann den mindestens einen Wärme- und/oder Kälteerzeuger, insbesondere während der zweiten Planungsspannen, entsprechend zur Erzeugung von Wärme und/oder Kälte an.

## Beschreibung

Die Erfindung betrifft ein Verfahren zur geplanten Steuerung des Betriebs eines Wärme- und/oder Kälteerzeugers, ein entsprechendes Gateway und System.

Es ist aus dem Stand der Technik eine rollierende Planung beispielsweise aus der CN 117 709 810 A bekannt. Zudem ist aus der DE 10 2022 203 456 A1 ein netzschonendes Lastmanagement für Wärmepumpen bekannt.

Aufgabe der Erfindung ist es, einen zuverlässigen Weg aufzuzeigen, einen Wärme- und/oder Kälteerzeuger möglichst optimiert zu betreiben, sodass bei unsicherem Planungshorizont dennoch ein für den Nutzer akzeptables Ergebnis erzielt wird, während möglichst ökonomisch und/oder preisgünstig und/oder unter möglichst geringem Primärenergiebedarf und/oder CO2-Ausstoß gearbeitet wird.

Gelöst wird die Aufgabe durch ein erfindungsgemäßes Verfahren, ein Gateway sowie ein System aus Gateway und Wärme- und/oder Kälteerzeuger. Bevorzugt wird das Verfahren mittels eines erfindungsgemäßen Gateways oder erfindungsgemäßen Systems durchgeführt und/oder ist der Gateway zur Durchführung des Verfahrens eingerichtet.

Das Verfahren zur Steuerung mindestens eines Wärme- und/oder Kälteerzeugers, insbesondere in und/oder an einem Gebäude, insbesondere einer Wärmepumpe, mittels mindestens einem Server und einem Gateway, ist so ausgestaltet, dass das Gateway mit dem mindestens einen Wärme- und/oder Kälteerzeuger, insbesondere über einen Bus, und mit dem mindestens einen Server, insbesondere über das Internet, verbunden ist.

Der mindestens eine Server bestimmt, insbesondere berechnet, eine Erwartungswärmebedarfsmenge und/oder Erwartungskältebedarfsmenge für eine erste Planungszeitspanne, insbesondere mit einer Länge im Bereich von 3h bis 48h, insbesondere einen Tag, basierend auf zumindest vorgegebenen Kennwerten des Gebäudes und mindestens einer Erwartungsaußentemperatur und bestimmt darauf basierend einen Planungswärmemengenbedarfsverlauf und/oder einen Planungskältemengenbedarfsverlauf über die erste Planungszeitspanne und eine Wärme- und/oder Kältebedarfstoleranzmenge.

Die Erwartungswärmebedarfsmenge und/oder Erwartungskältebedarfsmenge kann insbesondere aus der Heiz- und/oder Kühllastkurve des Gebäudes und mindestens einer vorhergesagten und/oder gemessenen Außentemperatur, insbesondere am und/oder am Standort des Gebäudes, bestimmt werden.

Mit besonderem Vorteil passt der Server die Heiz- und/oder Kühllastkurve des Gebäudes, insbesondere für zukünftige erste Planungsperioden und/oder insbesondere auf Grund von Daten aus mindestens einer laufenden und/oder zurück liegenden ersten Planungsperioden an, insbesondere auf Basis von erzeugten und/oder verbrauchten Wärme- und/oder Kältemenge und/oder, insbesondere gemessenen, Außentemperatur, insbesondere am und/oder am Standort des Gebäudes.

Erfindungsgemäß bestimmt der Server basierend auf vorbekannten Leistungskenndaten des mindestens einen Wärme- und/oder Kälteerzeugers eine Optimierung der Verteilung der Erzeugung der Erwartungswärmebedarfsmenge und/oder Erwartungskältebedarfsmenge über die erste Planungszeitspanne derart, dass die Erzeugung der Erwartungswärmebedarfsmenge und/oder Erwartungskältebedarfsmenge in der ersten Planungszeitspanne möglichst ökonomisch und/oder preisgünstig und/oder unter möglichst geringem Primärenergiebedarf und/oder CO2-Ausstoß realisiert wird. Dabei erfolgt die Bestimmung derart, dass die sich aus dem Planungswärmemengenbedarfsverlauf abgeleitete Wärmemenge, insbesondere zu jeder Zeit, maximal um die Wärmebedarfstoleranzmenge unterschritten wird und/oder die sich aus dem Planungskältemengenbedarfsverlauf abgeleitete Kältemenge, insbesondere zu jeder Zeit, maximal um die Kältebedarfstoleranzmenge unterschritten wird. Bevorzugt erfolgt die Bestimmung derart, dass die Erwartungswärmebedarfsmenge innerhalb der ersten Planungszeitspanne erzeugt wird und/oder die oder Erwartungskältebedarfsmenge in der ersten Planungszeitspanne erzeugt wird.

Für die Optimierung können insbesondere erwarteter Strompreis, erwartete Temperaturen, erwartete Solareinstrahlung, erwarteter Solarstromertrag und/oder - überschuss berücksichtigt werden. Dabei berücksichtigt die Optimierung insbesondere im Rahmen der Leistungskenndaten, in welchem Betriebszustand der Wärme- und/oder Kälteerzeuger zu welchem Stromeinsatz welche Wärme- und/oder Kältemenge erzeugen kann.

Dafür nimmt der mindestens eine Server bevorzugt eine Verteilung der Erzeugung in einer Mehrzahl zweiter Planungsspannen vor, wobei die zweiten Planungsspannen jeweils kleiner als die erste sind und insbesondere gemeinsam die erste bilden, aneinander zeitlich angrenzen und/oder jeweils gleiche Länge aufweisen und/oder jeweils eine Länge im Bereich von 1 5min, insbesondere von 30min, bis 5h, insbesondere bis 2h, und/oder die Erzeugung innerhalb jeder der zweiten Planungszeitspannen jeweils konstant geplant ist.

Die geplante Erzeugung zumindest der nächsten zweiten Planungszeitspanne, insbesondere der nächsten zweiten Planungszeitspannen, kommuniziert der mindestens eine Server, insbesondere über das Internet, an das Gateway. Das Gateway steuert dann den mindestens einen Wärme- und/oder Kälteerzeuger, insbesondere während der zweiten Planungsspanne und/oder Planungsspannen, entsprechend zur Erzeugung von Wärme und/oder Kälte an.

Mit Vorteil bestimmt der Server die vorbekannten Leistungskenndaten und/oder passt er diese an, für einen spezifischen Kälte- und/oder Wärmeerzeuger, insbesondere auf Grund von Daten, insbesondere Stromverbrauch, Außenbedingungen, wie Temperatur und/oder Feuchtigkeit eines Mediums, gegen die die Wärmepumpe arbeitet, Außentemperatur, Warmwasserspeicher-/Vorlauftemperatur, Betriebszustand des Wärme- und/oder Kälteerzeugers, insbesondere Arbeitsgrad und/oder Frequenz des Verdichters, und/oder erzeugten Wärme- und/oder Kältemengen. Die Daten werden insbesondere mittels und/oder über das Gateway dem Server bereit gestellt. Dadurch kann die Optimierung weiter verbessert werden und/oder können Besonderheiten eines Gerätes, seiner Aufstellung, des Gebäudes und/oder Umgebung berücksichtigt werden.

Insbesondere ist den Leistungskenndaten zu entnehmen, wie viel Wärme und/oder Kälte der Wärme- und/oder Kälteerzeuger, insbesondere Wärmepumpe, bei welchen Umgebungsbedingungen, wie Temperatur und/oder Feuchtigkeit eines Mediums, gegen die die Wärmepumpe arbeitet, Außentemperatur, Warmwasserspeicher-/Vorlauftemperatur, in welchem Betriebszustand des Wärme- und/oder Kälteerzeugers, insbesondere Arbeitsgrad und/oder Frequenz des Verdichters, pro eingesetzter elektrischer Energie bereit stellt. Dadurch kann die Optimierung weiter verbessert werden und/oder können Besonderheiten eines Gerätes, seiner Aufstellung und Umgebung berücksichtigt werden.

Mit besonderem Vorteil beinhaltet die Erwartungswärmebedarfsmenge eine Heizungserwartungswärmebedarfsmenge und eine Warmwassererwartungswärmebedarfsmenge. Bevorzugt wird nach Erzeugung der Warmwassererwartungswärmebedarfsmenge erneut eine Optimierung der Verteilung der Erzeugung der Heizungserwartungswärmebedarfsmenge über den verbleibenden Teil der ersten Planungszeitspanne durchgeführt.

Bevorzugt lernt der Server aus vergangenen ersten Planungsperioden, wie groß der Warmwasserwärmebedarf für zukünftige erste und/oder zweite Planungsperioden vermutlich sein wird und berücksichtig dies bei der Bestimmung der Warmwasserwärmeerwartungsbedarfsmenge und/oder wie er sich über die erste Planungsperiode vermutlich verteilen wird und berücksichtigt dies bei der Unterteilung. Dadurch kann eine weitere Verbesserung der Optimierung erreicht werden, da das Nutzerverhalten besser berücksichtigt werden kann und/oder Warmwasser bedarfsgerechter vorgehalten werden kann.

Bevorzugt stellt der mindestens eine Server eine Benutzerschnittstelle, insbesondere über das Internet, bereit, die es Benutzern erlaubt, mindestens einen Vorgabewert in einer vorgegebenen Spanne einzustellen, und wird die Wärmebedarfstoleranzmenge und/oder Kältebedarfstoleranzmenge zumindest auch basierend auf dem mindestens einen Vorgabewert berechnet. Dadurch wird es möglich, die Optimierung an besondere Bedürfnisse auf einfache Weise anzupassen.

Bevorzugt passt der Server die Bestimmung Wärme- und/oder Kältebedarfstoleranzmenge und/oder den Vorgabewert anhand von Benutzerverhalten von Benutzern im Gebäude und/oder Benutzerfeedback an, insbesondere passt er die Bestimmung für eine zukünftige erste Planungszeitspanne auf Grund von anhand von Benutzerverhalten von Benutzern im Gebäude und/oder Benutzerfeedback aus mindestens einer laufenden und/oder vergangenen ersten Planungszeitspanne an.

Mit besonderem Vorteil weist das Gebäude einen Warmwasserspeicher auf und wird bei Unterschreiten einer vorgegebenen Mindestwarmwassertemperatur und/oder bei einer eine vorgegebene Warmwassermenge überschreitenden Warmwassernutzung, abweichend von der geplanten Erzeugung der mindestens eine Wärmeerzeuger zur Heizung des Warmwasserspeichers genutzt und nach Beendigung der Heizung des Warmwasserspeichers, nach dem Unterschreiten und/oder Überschreiten vom mindestens einen Server erneut eine Optimierung der Verteilung der Erzeugung der Heizungserwartungswärmebedarfsmenge über den verbleibenden Teil der ersten Planungszeitspanne durchgeführt. Dadurch lässt sich flexibel auf unvorhergesehene Anforderungen reagieren und dennoch eine Optimierung realisieren.

Bevorzugt kommuniziert der Server nach jeder Optimierung die geplante Erzeugung zumindest der nächsten, insbesondere aller geplanten, zweiten Planungszeitspanne an das Gateway. Mit Vorteil und das Gateway den mindestens einen Wärme- und/oder Kälteerzeuger entsprechend zur Erzeugung von Wärme und/oder Kälte an, zumindest bis es neue geplante Erzeugungen empfängt und/oder ein Heartbeatsignal ausbleibt. Dadurch kann das Verfahren besonders robust ausgestaltet werden und die Kommunikationshäufigkeit reduziert werden.

Insbesondere kommuniziert der Server nach jeder Optimierung die geplante Erzeugung einer Mehrzahl nächster zweiter Planungszeitspannen an das Gateway und steuert das Gateway den mindestens einen Wärmeerzeuger entsprechend zur Erzeugung von Wärme an.

Mit Vorteil sendet der Server in regelmäßigen Abständen ein Heartbeatsignal an das Gateway. Bevorzugt wechselt das Gateway und/oder der Wärme- und/oder Kälteerzeuger bei Ausbleiben des Heartbeatsignal von der geplanten Erzeugung abweichend in einen lokalen Betriebsmodus, indem insbesondere die Ansteuerung des mindestens einen Wärme- und/oder Kälteerzeugers nur abhängig von im und/oder am Gebäude erfassten Daten, insbesondere Temperaturen, durchgeführt wird.

Bevorzugt sendet das Gateway den empfangenen Heartbeat an den Wärme- und/oder Kälterzeuger weiter. So kann das Verfahren auch gegen einen Ausfall des Gateways gesichert werden.

Mit Vorteil kommuniziert das Gateway die tatsächlich von dem mindestens einen Wärme- und/oder Kälteerzeuger erzeugte Wärmemenge, Kältemenge und/oder erzeugte Heizungswärmemenge an den mindestens einen Server. Bevorzugt berücksichtigt der Server die tatsächlich von dem mindestens einen Wärme- und/oder Kälteerzeuger erzeugte Wärmemenge, Kältemenge und/oder erzeugte Heizungswärmemenge bei einer erneuten Optimierung für den verbleibenden Teil der ersten Planungszeitspanne. Bevorzugt kommuniziert der Wärme- und/oder Kälteerzeuger die erzeugte Wärmemenge, Kältemenge und/oder erzeugte Heizungswärmemenge an das Gateway, insbesondere über den Bus.

Insbesondere ist die erste Planungszeitspanne konstant. Insbesondere wird das Verfahren für eine Vielzahl, insbesondere aufeinander folgende und/oder aneinander angrenzende erste Planungszeitspannen, insbesondere gleicher Länge, wiederholt. Insbesondere deckt eine erste Planungszeitspannen einen Zeitraum typischen Nutzungsverlauf und/oder Kälte- und/oder Wärmebedarfsverlaufs ab, der sich regelmäßig ähnlich wiederholt.

Mit Vorteil wird das Gebäude auch direkt mit Strom einer Photovoltaikanlage gespeist und erfasst das Gateway den jeweils aktuellen Stromüberertrag und steuert bei Stromüberertrag und/oder ungeplantem Stromüberertrag den mindestens einen Wärme- und/oder Kälteerzeuger abweichend von der geplanten Erzeugung so an, dass maximal bis zum Erreichen einer Maximaltemperatur und/oder einer maximalen Überschusswärmemenge mehr Wärme erzeugt und/oder maximal bis zum Erreichen einer Mindesttemperatur und/oder einer maximalen Überschusskältemenge mehr Kälte erzeugt wird als geplant. So kann überschüssige Energie genutzt werden.

Das Verfahren kann seine Vorteile insbesondere dann ausspielen, wenn die Optimierung keine Daten über Raumtemperaturen von Räumen das Gebäudes berücksichtigen kann und/oder berücksichtigt. Dadurch lässt sich auch der apparative Aufwand gering halten. Mit Vorteil wird aber die Temperatur eines Heißwasserspeichers erfasst, an den Server übermittelt und/oder bei der Optimierung berücksichtigt.

Gelöst wird die Aufgabe auch durch ein Gateway, aufweisend mindestens eine Schnittstelle zur Kommunikation mit mindestens einem Server über das Internet und einem Wärme- und/oder Kälteerzeuger, insbesondere via einen Bus, eingerichtet zum wiederholten Empfang und Speichern geplanter Wärme- und/oder Kälteerzeugung von dem mindestens einen Server für zumindest eine Mehrzahl von Planungszeitspannen und wobei das Gateway eingerichtet ist, empfangene geplante Wärme- und/oder Kälteerzeugungen für Planungszeitspannen, für die neue geplante Wärme- und/oder Kälteerzeugungen empfangen werden durch die neu empfangenen geplanten Wärme- und/oder Kälteerzeugungen zu ersetzen und eingerichtet ist, den mindestens einen Wärme- und/oder Kälteerzeuger entsprechend der zuletzt für eine Planungszeitpanne empfangenen geplanten Wärme- und/oder Kälteerzeugung in der jeweiligen Planungszeitspanne zur Erzeugung von Wärme und/oder Kälte anzusteuern.

Das Gateway weist insbesondere einen Prozessor, Arbeitsspeicher, nicht flüchtigen Speicher, mindestens ein Kommunikationsmodul, insbesondere eine Ethernet und/oder Wlan-Schnittstelle und eine Bus, insbesondere ModBus, Schnittstelle auf.

Bevorzugt ist das Gateway eingerichtet, über das Internet von dem mindestens einen Sever regelmäßig Heartbeats zu empfangen, insbesondere über eine erste Schnittstelle, und an den Wärme- und/oder Kälteerzeuger weiter zu senden, insbesondere über eine zweite Schnittstelle.

Gelöst wird die Aufgabe auch durch ein System aus Gateway und Wärme- und/oder Kälterzeuger, wobei die Wärmepumpe und/oder das Gateway insbesondere so eingerichtet sind, dass bei Ausbleiben des Heartbeats nicht gemäß der geplanten Wärme- und/oder Kälteerzeugung Wärme und/oder Kälte zu erzeugen, sondern in einen lokalen Modus zu wechseln, bei dem die Erzeugung von Wärme und/oder Kälte insbesondere nur abhängig von lokal, insbesondere im und/oder am Gebäude erfassten Werten, insbesondere Temperaturen, gesteuert wird.

Der Gateway kann, je nach Ausführung in den Wärme-/Kälteerzeuger integriert sein und/oder mit ihm in einem gemeinsamen Gehäuse verbaut sein. In einer besonders flexiblen Ausführung ist der Gateway aber in einem separaten Gehäuse, insbesondere mit eigener Spannungsversorgung angeordnet und/oder sind Gateway und Wärme-/Kälteerzeuger in separaten Gehäusen verbaut und/oder voneinander getrennt und insbesondere nur über einen Bus verbunden, ausgeführt. Dies ermöglicht den Einsatz eines Gateways für unterschiedliche und/oder mehrere Wärme-/Kälteerzeuger.

## Patentansprüche

1. Verfahren zur Steuerung mindestens eines Wärme- und/oder Kälteerzeugers in und/oder an einem Gebäude, insbesondere einer Wärmepumpe, mittels mindestens einem Server und einem Gateway, wobei das Gateway mit dem mindestens einen Wärme- und/oder Kälteerzeuger, insbesondere über einen Bus, und mit dem mindestens einen Server, insbesondere über das Internet, verbunden ist,
wobei der mindestens eine Server eine Erwartungswärmebedarfsmenge und/oder Erwartungskältebedarfsmenge für eine erste Planungszeitspanne, insbesondere einen Tag, basierend auf zumindest vorgegebenen Kennwerten des Gebäudes und mindestens einer Erwartungsaußentemperatur berechnet und darauf basierend einen Planungswärmemengenbedarfsverlauf und/oder Planungskältemengenbedarfsverlauf über die erste Planungszeitspanne festlegt und eine Wärme- und/oder Kältebedarfstoleranzmenge bestimmt und
basierend auf vorbekannten Leistungskenndaten des mindestens einen Wärme- und/oder Kälteerzeugers eine Optimierung der Verteilung der Erzeugung der Erwartungswärmebedarfsmenge und/oder Erwartungskältebedarfsmenge über die erste Planungszeitspanne derart unternimmt, dass die Erzeugung der Erwartungswärmebedarfsmenge und/oder Erwartungskältebedarfsmenge in der ersten Planungszeitspanne möglichst ökonomisch und/oder preisgünstig und/oder unter möglichst geringem Primärenergiebedarf und/oder CO2-Ausstoß realisiert wird, wobei die sich aus dem Planungswärmemengenbedarfsverlauf abgeleitete Wärmemenge maximal um die Wärmebedarfstoleranzmenge unterschritten wird und/oder die sich aus dem Planungskältemengenbedarfsverlauf abgeleitete Kältemenge maximal um die Kältebedarfstoleranzmenge unterschritten wird,
wobei der mindestens eine Server die Verteilung der Erzeugung in einer Mehrzahl zweiter Planungsspannen unterteilt vornimmt, wobei die zweiten Planungsspannen jeweils kleiner als die erste Planungsspanne sind und insbesondere gemeinsam die erste Planungsspanne bilden, aneinander zeitlich angrenzen und/oder jeweils gleiche Dauer aufweisen und/oder die Erzeugung innerhalb jeder der zweiten Planungszeitspannen jeweils konstant geplant ist,
wobei der mindestens eine Server die geplante Erzeugung zumindest der nächsten zweiten Planungszeitspanne an das Gateway kommuniziert und das Gateway den mindestens einen Wärme- und/oder Kälteerzeuger entsprechend zur Erzeugung von Wärme und/oder Kälte ansteuert.

2. Verfahren nach Anspruch 1, wobei die Erwartungswärmebedarfsmenge eine Heizungserwartungswärmebedarfsmenge und eine Warmwassererwartungswärmebedarfsmenge beinhaltet und insbesondere nach Erzeugung der Warmwassererwartungswärmebedarfsmenge erneut eine Optimierung der Verteilung der Erzeugung der Heizungserwartungswärmebedarfsmenge über den verbleibenden Teil der ersten Planungszeitspanne durchgeführt wird.

3. Verfahren einem der vorstehenden Ansprüche, wobei der mindestens eine Server eine Benutzerschnittstelle bereitstellt, die es Benutzern erlaubt, mindestens einen Vorgabewert in einer vorgegebenen Spanne einzustellen, und die Wärmebedarfstoleranzmenge und/oder Kältebedarfstoleranzmenge zumindest auch basierend auf dem mindestens einen Vorgabewert berechnet wird.

4. Verfahren einem der vorstehenden Ansprüche, wobei das Gebäude einen Warmwasserspeicher aufweist und bei Unterschreiten einer vorgegebenen Mindestwarmwassertemperatur und/oder bei einer eine vorgegebene Warmwassermenge überschreitenden Warmwassernutzung, abweichend von der geplanten Erzeugung der mindestens eine Wärmeerzeuger zur Heizung des Warmwasserspeichers genutzt wird und nach Beendigung der Heizung des Warmwasserspeichers vom mindestens einen Server erneut eine Optimierung der Verteilung der Erzeugung der
Heizungserwartungswärmebedarfsmenge über den verbleibenden Teil der ersten Planungszeitspanne durchgeführt wird.

5. Verfahren einem der vorstehenden Ansprüche, wobei der Server nach jeder Optimierung die geplante Erzeugung zumindest der nächsten zweiten Planungszeitspanne, insbesondere der nächsten zweiten Planungszeitspannen, insbesondere aller verbleibenden zweiten Planungszeitspannen der ersten Planungszeitspanne, an das Gateway kommuniziert und das Gateway den mindestens einen Wärme- und/oder Kälteerzeuger entsprechend zur Erzeugung von Wärme und/oder Kälte ansteuert.

6. Verfahren einem der vorstehenden Ansprüche, wobei der Server nach jeder Optimierung die geplante Erzeugung einer Mehrzahl nächster zweiter Planungszeitspannen an das Gateway kommuniziert und das Gateway den mindestens einen Wärme- und/oder Kälteerzeuger entsprechend zur Erzeugung von Wärme und/oder Kälte ansteuert.

7. Verfahren einem der vorstehenden Ansprüche, wobei der Server in regelmäßigen Abständen ein Heartbeatsignal an das Gateway sendet und das Gateway und/oder der Wärme- und/oder Kälteerzeuger bei Ausbleiben des Heartbeatsignal von der geplanten Erzeugung abweichend in einen lokalen Betriebsmodus wechselt/n und/oder die Ansteuerung des mindestens einen Wärme- und/oder Kälteerzeugers nur abhängig von im und/oder am Gebäude erfassten Daten durchführt wird, wobei das Gateway empfangene Heartbeatsignale bevorzugt an den Wärme- und/oder Kälteerzeuger weitersendet.

8. Verfahren einem der vorstehenden Ansprüche, wobei das Gateway die tatsächlich von dem mindestens einen Wärme- und/oder Kälteerzeuger erzeugte Wärmemenge und/oder erzeugte Heizungswärmemenge und/oder erzeugte Kältemenge an den mindestens einen Server kommuniziert und der Server dies bei einer erneuten Optimierung für den verbleibenden Teil der ersten Zeitspanne berücksichtigt und insbesondere vom Server eine neue Optimierung durchgeführt wird, wenn eine eine vorbestimmte Abweichung zwischen geplanter und tatsächlich erzeugter Wärmemenge und/oder Heizungswärmemenge und/oder Kältemenge vorliegt.

9. Verfahren nach einem der vorstehenden Ansprüche, wobei vom Server eine neue Optimierung durchgeführt wird, wenn eine Abweichung zwischen tatsächlicher Wärme- und/oder Kältebedarfsmenge und Wärme- und/oder Kältebedarfserwartungsmenge festgestellt wird und der Gateway insbesondere die tatsächlicher Wärme- und/oder Kältebedarfsmenge und/oder dafür indikative Werte wie Temperatur eines Warmwasserspeichers und/oder Rücklauftemperatur erfasst und an den Server übermittelt.

10. Verfahren nach einem der vorstehenden Ansprüche, wobei das Gebäude auch direkt mit Strom einer Photovoltaikanlage gespeist wird, die insbesondere im und/oder am Gebäude montiert ist, und der Gateway den jeweils aktuellen Stromüberertrag, insbesondere den Stromertrag der Photovoltaikanlage, der den Strombedarf des Gebäudes übersteigt, erfasst und bei Stromüberertrag den mindestens einen Wärme- und/oder Kälteerzeuger abweichend von der geplanten Erzeugung so ansteuert, dass maximal bis zum Erreichen einer Maximaltemperatur und/oder einer maximalen Überschusswärmemenge mehr Wärme und/oder maximal bis zum Erreichen einer Mindesttemperatur und/oder einer maximalen Überschusskältemenge mehr Kälte erzeugt wird als geplant.

11. Verfahren nach einem der vorstehenden Ansprüche, wobei die Optimierung keine Daten über Raumtemperaturen von Räumen das Gebäudes berücksichtigt.

12. Gateway, aufweisend mindestens eine Schnittstelle zur Kommunikation mit mindestens einem Server, insbesondere über das Internet, und einem Wärme- und/oder Kälteerzeuger, insbesondere via einen Bus, eingerichtet zum wiederholten Empfang und Speichern geplanter Wärme- und/oder Kälteerzeugungen, insbesondere Wärme- und/oder Kälteerzeugungsmengen, von dem mindestens einen Server für zumindest eine Mehrzahl von Planungszeitspannen und wobei das Gateway eingerichtet ist, empfangene geplante Wärme- und/oder Kälteerzeugungen für Planungszeitspannen, für die neue geplante Wärme- und/oder Kälteerzeugungen empfangen werden durch die neu empfangenen geplanten Wärme- und/oder Kälteerzeugungen zu ersetzen und eingerichtet den mindestens einen Wärme- und/oder Kälteerzeuger entsprechend der zuletzt für eine Planungszeitpanne empfangenen geplanten Wärme- und/oder Kälteerzeugung in der jeweiligen Planungszeitspanne zur Erzeugung von Wärme und/oder Kälte anzusteuern.

13. Gateway nach Anspruch 12, wobei das Gateway eingerichtet ist über das Internet von dem mindestens einen Sever regelmäßig Heartbeatsignale zu empfangen und an den Wärme- und/oder Kälteerzeuger weiter zu senden.

14. System aus Gateway und Wärme- und/oder Kälteerzeuger, wobei die Wärmepumpe und/oder das Gateway insbesondere so eingerichtet ist/sind, dass bei Ausbleiben des Heartbeatsignals nicht gemäß der geplanten Wärme- und/oder Kälteerzeugung Wärme und/oder Kälte zu erzeugen, sondern in einen lokalen Modus zu wechseln, bei dem die Erzeugung von Wärme und/oder Kälte nur durch lokal, insbesondere im und/oder am Gebäude, erfasste Werte, insbesondere Temperaturen, gesteuert wird.

## Geänderte Patentansprüche

### Geänderte Patentansprüche gemäss Regel 137(2) EPÜ.

1. Verfahren zur Steuerung mindestens eines Wärme- und/oder Kälteerzeugers in und/oder an einem Gebäude, insbesondere einer Wärmepumpe, mittels mindestens einem Server und einem Gateway, wobei das Gateway mit dem mindestens einen Wärme- und/oder Kälteerzeuger, insbesondere über einen Bus, und mit dem mindestens einen Server, insbesondere über das Internet, verbunden ist,
wobei der mindestens eine Server eine Erwartungswärmebedarfsmenge und/oder Erwartungskältebedarfsmenge für eine erste Planungszeitspanne, insbesondere einen Tag, basierend auf zumindest vorgegebenen Kennwerten des Gebäudes und mindestens einer Erwartungsaußentemperatur berechnet und darauf basierend einen Planungswärmemengenbedarfsverlauf und/oder Planungskältemengenbedarfsverlauf über die erste Planungszeitspanne festlegt und eine Wärme- und/oder Kältebedarfstoleranzmenge bestimmt und
basierend auf vorbekannten Leistungskenndaten des mindestens einen Wärme- und/oder Kälteerzeugers eine Optimierung der Verteilung der Erzeugung der Erwartungswärmebedarfsmenge und/oder Erwartungskältebedarfsmenge über die erste Planungszeitspanne derart unternimmt, dass die Erzeugung der Erwartungswärmebedarfsmenge und/oder Erwartungskältebedarfsmenge in der ersten Planungszeitspanne möglichst ökonomisch und/oder preisgünstig und/oder unter möglichst geringem Primärenergiebedarf und/oder CO2-Ausstoß realisiert wird, wobei die sich aus dem Planungswärmemengenbedarfsverlauf abgeleitete Wärmemenge maximal um die Wärmebedarfstoleranzmenge unterschritten wird und/oder die sich aus dem Planungskältemengenbedarfsverlauf abgeleitete Kältemenge maximal um die Kältebedarfstoleranzmenge unterschritten wird,
wobei der mindestens eine Server die Verteilung der Erzeugung in einer Mehrzahl zweiter Planungsspannen unterteilt vornimmt, wobei die zweiten Planungsspannen jeweils kleiner als die erste Planungsspanne sind und insbesondere gemeinsam die erste Planungsspanne bilden, aneinander zeitlich angrenzen und/oder jeweils gleiche Dauer aufweisen und/oder die Erzeugung innerhalb jeder der zweiten Planungszeitspannen jeweils konstant geplant ist,
wobei der mindestens eine Server die geplante Erzeugung zumindest der nächsten zweiten Planungszeitspanne an das Gateway kommuniziert und das Gateway den mindestens einen Wärme- und/oder Kälteerzeuger entsprechend zur Erzeugung von Wärme und/oder Kälte ansteuert, wobei der Server in regelmäßigen Abständen ein Heartbeatsignal an das Gateway sendet und das Gateway und/oder der Wärme- und/oder Kälteerzeuger bei Ausbleiben des Heartbeatsignal von der geplanten Erzeugung abweichend in einen lokalen Betriebsmodus wechselt/n und/oder die Ansteuerung des mindestens einen Wärme- und/oder Kälteerzeugers nur abhängig von im und/oder am Gebäude erfassten Daten durchführt wird, wobei das Gateway empfangene Heartbeatsignale bevorzugt an den Wärmeund/oder Kälteerzeuger weitersendet, **dadurch gekennzeichnet, dass** der Server nach jeder Optimierung die geplante Erzeugung einer Mehrzahl nächster zweiter Planungszeitspannen an das Gateway kommuniziert.

2. Verfahren nach Anspruch 1, wobei die Erwartungswärmebedarfsmenge eine Heizungserwartungswärmebedarfsmenge und eine Warmwassererwartungswärmebedarfsmenge beinhaltet und insbesondere nach Erzeugung der Warmwassererwartungswärmebedarfsmenge erneut eine Optimierung der Verteilung der Erzeugung der Heizungserwartungswärmebedarfsmenge über den verbleibenden Teil der ersten Planungszeitspanne durchgeführt wird.

3. Verfahren einem der vorstehenden Ansprüche, wobei der mindestens eine Server eine Benutzerschnittstelle bereitstellt, die es Benutzern erlaubt, mindestens einen Vorgabewert in einer vorgegebenen Spanne einzustellen, und die Wärmebedarfstoleranzmenge und/oder Kältebedarfstoleranzmenge zumindest auch basierend auf dem mindestens einen Vorgabewert berechnet wird.

4. Verfahren einem der vorstehenden Ansprüche, wobei das Gebäude einen Warmwasserspeicher aufweist und bei Unterschreiten einer vorgegebenen Mindestwarmwassertemperatur und/oder bei einer eine vorgegebene Warmwassermenge überschreitenden Warmwassernutzung, abweichend von der geplanten Erzeugung der mindestens eine Wärmeerzeuger zur Heizung des Warmwasserspeichers genutzt wird und nach Beendigung der Heizung des Warmwasserspeichers vom mindestens einen Server erneut eine Optimierung der Verteilung der Erzeugung der Heizungserwartungswärmebedarfsmenge über den verbleibenden Teil der ersten Planungszeitspanne durchgeführt wird.

5. Verfahren einem der vorstehenden Ansprüche, wobei der Server nach jeder Optimierung die geplante Erzeugung zumindest der nächsten zweiten Planungszeitspanne, insbesondere der nächsten zweiten Planungszeitspannen, insbesondere aller verbleibenden zweiten Planungszeitspannen der ersten Planungszeitspanne, an das Gateway kommuniziert und das Gateway den mindestens einen Wärme- und/oder Kälteerzeuger entsprechend zur Erzeugung von Wärme und/oder Kälte ansteuert.

6. Verfahren einem der vorstehenden Ansprüche, wobei das Gateway die tatsächlich von dem mindestens einen Wärme- und/oder Kälteerzeuger erzeugte Wärmemenge und/oder erzeugte Heizungswärmemenge und/oder erzeugte Kältemenge an den mindestens einen Server kommuniziert und der Server dies bei einer erneuten Optimierung für den verbleibenden Teil der ersten Zeitspanne berücksichtigt und insbesondere vom Server eine neue Optimierung durchgeführt wird, wenn eine eine vorbestimmte Abweichung zwischen geplanter und tatsächlich erzeugter Wärmemenge und/oder Heizungswärmemenge und/oder Kältemenge vorliegt.

7. Verfahren nach einem der vorstehenden Ansprüche, wobei vom Server eine neue Optimierung durchgeführt wird, wenn eine Abweichung zwischen tatsächlicher Wärme- und/oder Kältebedarfsmenge und Wärmeund/oder Kältebedarfserwartungsmenge festgestellt wird und der Gateway insbesondere die tatsächlicher Wärme- und/oder Kältebedarfsmenge und/oder dafür indikative Werte wie Temperatur eines Warmwasserspeichers und/oder Rücklauftemperatur erfasst und an den Server übermittelt.

8. Verfahren nach einem der vorstehenden Ansprüche, wobei das Gebäude auch direkt mit Strom einer Photovoltaikanlage gespeist wird, die insbesondere im und/oder am Gebäude montiert ist, und der Gateway den jeweils aktuellen Stromüberertrag, insbesondere den Stromertrag der Photovoltaikanlage, der den Strombedarf des Gebäudes übersteigt, erfasst und bei Stromüberertrag den mindestens einen Wärme- und/oder Kälteerzeuger abweichend von der geplanten Erzeugung so ansteuert, dass maximal bis zum Erreichen einer Maximaltemperatur und/oder einer maximalen Überschusswärmemenge mehr Wärme und/oder maximal bis zum Erreichen einer Mindesttemperatur und/oder einer maximalen Überschusskältemenge mehr Kälte erzeugt wird als geplant.

9. Verfahren nach einem der vorstehenden Ansprüche, wobei die Optimierung keine Daten über Raumtemperaturen von Räumen das Gebäudes berücksichtigt.

10. Gateway, aufweisend mindestens eine Schnittstelle zur Kommunikation mit mindestens einem Server, insbesondere über das Internet, und einem Wärme- und/oder Kälteerzeuger, insbesondere via einen Bus, eingerichtet zum wiederholten Empfang und Speichern geplanter Wärme- und/oder Kälteerzeugungen, insbesondere Wärmeund/oder Kälteerzeugungsmengen, von dem mindestens einen Server für zumindest eine Mehrzahl von Planungszeitspannen und wobei das Gateway eingerichtet ist, empfangene geplante Wärme- und/oder Kälteerzeugungen für Planungszeitspannen, für die neue geplante Wärmeund/oder Kälteerzeugungen empfangen werden durch die neu empfangenen geplanten Wärme- und/oder Kälteerzeugungen zu ersetzen und eingerichtet den mindestens einen Wärme- und/oder Kälteerzeuger entsprechend der zuletzt für eine Planungszeitpanne empfangenen geplanten Wärme- und/oder Kälteerzeugung in der jeweiligen Planungszeitspanne zur Erzeugung von Wärme und/oder Kälte anzusteuern wobei das Gateway eingerichtet ist über das Internet von dem mindestens einen Sever regelmäßig Heartbeatsignale zu empfangen und an den Wärme- und/oder Kälteerzeuger weiter zu senden, wobei die Wärmepumpe und/oder das Gateway insbesondere so eingerichtet ist/sind, bei Ausbleiben des Heartbeatsignals nicht gemäß der geplanten Wärmeund/oder Kälteerzeugung Wärme und/oder Kälte zu erzeugen, sondern in einen lokalen Modus zu wechseln, bei dem die Erzeugung von Wärme und/oder Kälte nur durch lokal, insbesondere im und/oder am Gebäude, erfasste Werte, insbesondere Temperaturen, gesteuert wird, **dadurch gekennzeichnet, dass** das Gateway eingerichtet ist, vom Server jeweils einer Mehrzahl nächster zweiter Planungszeitspannen zu empfangen

11. System aus einem Gateway nach Anspruch 10 und einem Wärmeund/oder Kälteerzeuger.
